# EUROPÄISCHE PATENTANMELDUNG

(11) **EP 1 464 983 A1**
(43) Veröffentlichungstag der Anmeldung: **06.10.2004**
(21) Anmeldenummer: 04007437.9
(22) Anmeldetag: 26.03.2004
(51) Int. Cl.: G01S 7/495, G01V 8/20

(54) **Optoelektronisches Überwachungssystem mit veränderbarer Sendepulsfolge zum Reduzieren von Störsignalen**

(30) Priorität: 31.03.2003 DE 10314581
(71) Anmelder: SICK AG, 79183 Waldkirch/Breisgau (DE)
(72) Erfinder: Del Monte, Mauro, 41100 Modena (IT); Klingelhöfer, Christian, Dr., 79110 Freiburg (DE)
(74) Vertreter: Manitz, Finsterwald & Partner GbR

(57) **Zusammenfassung**

Ein optoelektronisches Überwachungssystem zur Feststellung von in einem Überwachungsbereich vorhandenen Objekten umfasst zumindest einen durch wenigstens einen Sender und wenigstens einen Empfänger definierten optischen Kanal sowie eine Steuer- und/oder Auswerteeinheit, wobei der Überwachungsbereich über einen jeweiligen optischen Kanal mit Lichtpulsen abgetastet wird und die Steuer- und/ oder Auswerteeinheit ein vom Ausgangssignal des Empfängers eines jeweiligen optischen Kanals abhängiges Auswertesignal liefert. Die Steuer- und/oder Auswerteeinheit umfasst Mittel, um zumindest im Fall einer erkannten, von einem anderen System ausgehenden Störung die Abtastperiode, mit der der Überwachungsbereich über einen jeweiligen optischen Kanal abgetastet wird, und/oder den Zeitpunkt, zu dem der Überwachungsbereich über einen jeweiligen optischen Kanal während einer jeweiligen Abtastperiode mit wenigstens einem Lichtpuls beaufschlagt wird, und/oder die Pulsfolge bzw. Pulsabstände innerhalb eines jeweiligen optischen Kanals, und/oder die Reihenfolge, in der zumindest zwei optische Kanäle nacheinander aktiviert werden, nach dem Zufallsprinzip zu variieren. Das einem jeweiligen optischen Kanal zugeordnete Auswertesignal wird in Abhängigkeit von den während zumindest zweier Abtastperioden erhaltenen Ausgangssignalen des betreffenden Empfängers erzeugt.

## Beschreibung

Die Erfindung betrifft ein optoelektronisches Überwachungssystem zur Feststellung von in einem Überwachungsbereich vorhandenen Objekten, mit zumindest einem durch wenigstens einen Sender und wenigstens einen Empfänger definierten optischen Kanal sowie mit einer Steuer- und/oder Auswerteeinheit, wobei der Überwachungsbereich über einen jeweiligen optischen Kanal mit Lichtpulsen abgetastet wird und die Steuer- und/oder Auswerteeinheit ein vom Ausgangssignal des Empfängers eines jeweiligen optischen Kanals abhängiges Auswertesignal liefert.

Bei den bisher üblichen optoelektronischen Überwachungssystemen, bei denen Sender/Empfänger-Paare aus einzelnen Sendern und Empfängern eingesetzt werden, werden die Sender/Empfänger-Paare über eine interne Multiplexfunktion nacheinander aktiviert, um eine gegenseitige Beeinflussung der Sender/Empfänger-Paare zu verhindern. Die Sendedauer entspricht nur einem Bruchteil der Abtastperiode. Dabei ist diese Abtastperiode jedoch festgelegt, und die Abtastreihenfolge wird bei jedem Abtastvorgang in der gleichen Weise wiederholt.

Die Wahrscheinlichkeit, dass es in einem solchen herkömmlichen System zu störenden Interferenzen bzw. einer störenden gegenseitigen Beeinflussung kommt, hängt nur vom Verhältnis zwischen der Pulsdauer und der Abtastperiode sowie von der Anzahl der Systeme ab. Da der Systemtakt auf einem internen Quarzoszillator basiert, ist dieser sehr stabil (200 ...50 ppm). Die Stabilität der Taktfrequenz und die wiederholt gleich bleibende Abtastfolge können nun aber die Sicherheit beeinträchtigen, da zwei verschiedene Systeme über eine längere Zeit hinweg in einem synchronen Zustand arbeiten können. In einem solchen synchronen oder synchronisierten Zustand kann beispielsweise ein Empfänger a eines Systems A auch Licht von einem Sender b eines anderen Systems B empfangen. Es kann also nicht ausgeschlossen werden, dass man im System A ein mehrdeutiges oder unklares Signal erhält, was ein hohes Maß an Unsicherheit mit sich bringt. Gegenseitige Störeinflüsse zwischen verschiedenen Sensorpaaren oder Überwachungssystemen sind insbesondere dann zu befürchten, wenn die Sender und Empfänger in einem größeren Abstand voneinander angeordnet sind, der in der Praxis beispielsweise bis zu 60 m betragen kann. Selbst dann, wenn benachbarten Sensorpaaren getrennte Steuer- und/oder Auswerteeinheiten zugeordnet sind, kann es also zu den erwähnten gegenseitigen Störeinflüssen oder Interferenzen kommen, da ein jeweiliger Sender Licht zu einem nicht zugeordneten Empfänger senden kann.

Ein weiteres Phänomen einer gegenseitigen störenden Beeinflussung kann beispielsweise auch bei der Verwendung modulierter Pulse (burst) auftreten. Empfängt eine Photodiode modulierte Lichtpulse von mehr als einem Sender, so kann es zu dem Phänomen einer konstruktiven oder destruktiven Interferenz kommen. Ist der Pegel eines empfangenen, von einem unmittelbar zugeordneten Sender stammenden Signals vergleichbar dem Pegel eines empfangenen, von einem nicht zugeordneten Sender stammenden Signals, so wird vom betreffenden Empfänger ein willkürliches, unbestimmtes Signal empfangen, was zu einer Abschaltung der Einheiten bzw. des Systems führen kann. In der Praxis kann dieses Phänomen insbesondere dann auftreten, wenn ein von einer anderen Einheit bzw. einem anderen System stammender synchronisierter Lichtpuls empfangen wird und/oder zwei in Serie geschaltete Sender/Empfänger-Paare verwendet werden und eine kreuzweise Störbeeinflussung zwischen Sendern und Empfängern vorliegt.

Der Erfindung liegt die Aufgabe zugrunde, ein verbessertes optoelektronisches Übertragungssystem der eingangs genannten Art zu schaffen, bei dem die zuvor genannten Probleme beseitigt sind.

Dieses Aufgabe wird erfindungsgemäß dadurch gelöst, dass die Steuerund/oder Auswerteeinheit Mittel umfasst, um zumindest im Fall einer erkannten, von einem anderen System ausgehenden Störung die Abtastperiode, mit der der Überwachungsbereich über einen jeweiligen optischen Kanal abgetastet wird, und/ oder den Zeitpunkt, zu dem der Überwachungsbereich über einen jeweiligen optischen Kanal während einer jeweiligen Abtastperiode mit wenigstens einem Lichtpuls beaufschlagt wird, und/oder die Pulsfolge bzw. Pulsabstände innerhalb eines jeweiligen optischen Kanals 18ᵢ, und/oder die Reihenfolge, in der zumindest zwei optische Kanäle nacheinander aktiviert werden, nach dem Zufallsprinzip zu variieren, und dass das einem jeweiligen optischen Kanal zugeordnete Auswertesignal in Abhängigkeit von den während zumindest zweier Abtastperioden erhaltenen Ausgangssignalen des betreffenden Empfängers erzeugt wird. Dabei erfolgt vorzugsweise von Abtastung zu Abtastung eine jeweilige Variation.

Aufgrund dieser Ausbildung ist die Gefahr einer gegenseitigen störenden Beeinflussung verschiedener, jeweils mit gepulstem Licht arbeitender Systeme auf ein Minimum reduziert. Wird als Auswertesignal beispielsweise ein Objekt-Feststellungssignal erzeugt, so liefert die Steuerund/oder Auswerteinheit nur dann ein solches Objekt-Feststellungssignal, wenn während zumindest zweier Abtastperioden über einen jeweiligen optischen Kanal ein betreffendes Objekt erkannt wurde, d.h. der Strahlengang zumindest zweimal hintereinander beispielsweise unterbrochen wurde. Angesichts der nach dem Zufallsprinzip vorgenommenen Variationen ist praktisch ausgeschlossen, dass infolge einer störenden Beeinflussung durch ein benachbartes Überwachungssystem die Erkennung eines im Überwachungsbereich befindlichen Objektes beeinträchtigt bzw. verhindert wird. Die Verfügbarkeit wird entsprechend erhöht. Das erfindungsgemäße optoelektronische Überwachungssystem reagiert also nicht auf solche störenden Einflüsse durch benachbarte Systeme, wodurch die Sicherheit entsprechend erhöht wird.

Die Steuer- und/oder Auswerteeinheit kann zumindest einen Zufallsgenerator umfassen, wobei eine jeweilige Variation dann durch diesen Zufallsgenerator vorgebbar ist.

Das einem jeweiligen optischen Kanal zugeordnete Auswertesignal wird vorzugsweise in Abhängigkeit von über zumindest einen Teil der Abtastperiode integrierten Ausgangssignalen des betreffenden Empfängers erzeugt.

In Kombination mit der nach dem Zufallsprinzip vorgenommenen Variation bringt eine solche Integration eine noch höhere Sicherheit und Zuverlässigkeit mit sich. Indem eine Integrationsfunktion auch auf die Empfangssignale aus einer jeweiligen Abtastperiode angewandt wird, wird die Wahrscheinlichkeit von Störeinflüssen auf ein Minimum reduziert. Die Implementierung einer Integrationsfunktion ist auch als solche von Vorteil und von entsprechendem praktischem Nutzen, was insbesondere für den eingangs erwähnten Fall der Verwendung modulierter Pulse (Burst) gilt. Mit einer solchen Integration ergibt sich eine höhere Sicherheit, als dies beispielsweise allein mit einer so genannten CW-Modulation der Fall ist. Zudem ist eine solche Integrationsfunktion insbesondere auch bei solchen Systemen von Vorteil, die in besonderem Maße für gegenseitige Störeinflüsse anfällig sind und bei denen höhere Ansprechzeiten, wie z.B. beim Seitenschutz von fahrerlosen Transportsystemen, toleriert werden können.

Bei einer zweckmäßigen praktischen Ausführungsform des erfindungsgemäßen optoelektronischen Überwachungssystems ist ein jeweiliger optischer Kanal durch einen Einzelstrahlsensor definiert. Bei einem System mit mehreren optischen Kanälen kann also eine entsprechende Anzahl solcher Einzelstrahlsensoren eingesetzt werden.

Im einfachsten Fall kann ein jeweiliger optischer Kanal durch nur einen Sender und nur einen Empfänger definiert sein.

Sender und Empfänger eines jeweiligen optischen Kanals sind zweckmäßigerweise synchronisiert. Dabei können diese systemintern oder beispielsweise durch extern erzeugte Synchronisiersignale synchronisiert sein.

Die Synchronisation zwischen Sender und Empfänger kann insbesondere optisch erfolgen, wozu der Sender beispielsweise entsprechende Informationen an den Empfänger liefern kann.

Wie bereits erwähnt, kann grundsätzlich auch eine Modulation der Lichtpulse vorgesehen sein.

Das optoelektronische Überwachungssystem kann beispielsweise als Sicherungssystem, als Zugangskontrollsystem, als Lichtschranke und/oder dergleichen vorgesehen sein. Eine jeweilige Lichtschranke kann beispielsweise als Autokollimationslichtschranke, Reflektionslichtschranke, Lichttaster, Abstandstaster, usw. ausgeführt sein. Das optoelektronische Überwachungssystem kann beispielsweise eine oder mehrere Sicherheits-Einzelstrahllichtschranken umfassen. Eine entsprechende Sicherheits-Lichtschranke kann beispielsweise als Zugangssicherung zu Gefahrenbreichen an Maschinen oder Anlagen dienen. Die betreffenden Geräte werden im Zugangsbereich mit dem notwendigen Sicherheitsabstand von der nächstliegenden Gefahrenstelle montiert und geben bei Unterbrechung des gepulsten Lichtstrahls z.B. ein Abschaltsignal an die Maschine oder Anlage. Dabei kann das System beispielsweise so ausgeführt sein, dass z.B. eine Abschaltung erst erfolgt, nachdem bezüglich eines jeweiligen optischen Kanals während zumindest zwei aufeinander folgenden Abtastungen eine Unterbrechung des jeweiligen Lichtpfades stattgefunden hat. Es sind auch beliebige andere Ausgestaltungen denkbar.

Grundsätzlich ist beispielsweise auch ein Einsatz an Robotern, Bearbeitungszentren, Verarbeitungsmaschinen, Palettieranlagen, Hochregallagern, Transferstraßen usw. denkbar.

Die Steuer- und/oder Auswerteinheit kann getrennt von den Sendern und Empfängern oder zumindest teilweise auch im Gehäuse dieser Sender und Empfänger vorgesehen sein. Sie kann beispielsweise einen Controller usw. umfassen, der zur Sicherstellung der Zufallsvariationen entsprechend programmiert bzw. programmierbar ist.

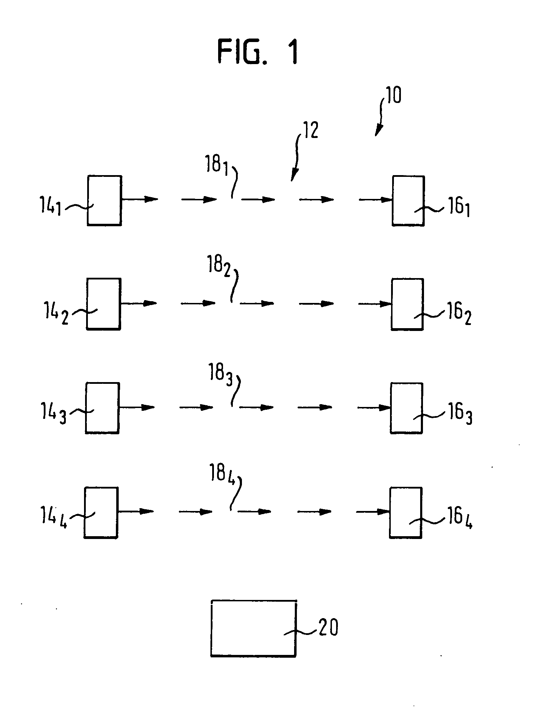

Die Erfindung wird im folgenden anhand eines Ausführungsbeispiels unter Bezugnahme auf die Zeichnung näher erläutert.

Die einzige Figur der Zeichnung zeigt in rein schematischer Darstellung eine rein beispielhafte Ausführungsform eines optoelektronischen Überwachungssystems 10, das insbesondere der Feststellung von in einem Überwachungsbereich 12 vorhandenen Objekten dienen kann.

Das optoelektronische Überwachungssystem 10 umfasst mehrere Sender 14ᵢ und eine entsprechende Anzahl von Empfängern 16ᵢ, die hier beispielsweise auf unterschiedlichen Seiten des Überwachungsbereichs 12 vorgesehen sind. Beim dargestellten Ausführungsbeispiel sind vier Sender 14ᵢ und vier Empfänger 16i vorgesehen, wobei jedem Sender 14ᵢ jeweils ein Empfänger 16ᵢ zugeordnet ist. Die verschiedenen Sender/Empfänger-Paare 14ᵢ/ 16ᵢ definieren also jeweils einen optischen Kanal 18ᵢ.

Überdies umfasst das optoelektronische Überwachungssystem 10 eine Steuer- und/oder Auswerteinheit 20. Diese kann getrennt von den Sendern 14ᵢ und den Empfängern 16ᵢ oder zumindest teilweise in den Gehäusen dieser Sender und Empfänger vorgesehen sein. Sie kann einen insbesondere programmierbaren Controller oder dergleichen umfassen.

Der Überwachungsbereich 12 wird über die optischen Kanäle 18ᵢ mit Lichtpulsen abgetastet, wozu die verschiedenen optischen Kanäle 18i nacheinander entsprechend angesteuert werden.

Die Steuer- und/oder Auswerteeinheit 20 liefert für einen jeweiligen optischen Kanal 18ᵢ ein von den Ausgangssignalen des betreffenden Empfängers 16ᵢ abhängiges Auswertesignal. Dabei kann es sich beispielsweise um ein Objekt-Feststellungssignal und/oder dergleichen handeln.

Die Steuer- und/oder Auswerteeinheit 20 umfasst Mittel, um zumindest im Fall einer erkannten, von einem anderen System ausgehenden Störung die Abtastperiode, mit der der Überwachungsbereich 12 über zumindest einen jeweiligen optischen Kanal 18ᵢ abgetastet wird, und/oder dem Zeitpunkt, zu dem der Überwachungsbereich 12 über einen jeweiligen optischen Kanal 18i während einer jeweiligen Abtastperiode mit wenigstens einem Lichtpuls beaufschlagt wird, und/oder die Pulsfolge bzw. Pulsabstände innerhalb eines jeweiligen optischen Kanals 18ᵢ und/oder die Reihenfolge, in der die optischen Kanäle 18ᵢ, nacheinander aktiviert werden, nach dem Zufallsprinzip zu variieren.

Die Steuer- und/oder Auswerteeinheit 20 ist überdies so ausgelegt, dass das einem jeweiligen optischen Kanal 18ᵢ zugeordnete Auswertesignal in Abhängigkeit von den während zumindest zweier Abtastperioden erhaltenen Ausgangssignalen des betreffenden Empfängers erzeugt wird. Sie kann z.B. so ausgelegt sein, dass beispielsweise ein Abschaltsignal z.B. erst dann erzeugt, wenn der durch einen jeweiligen optischen Kanal 18ᵢ definierte Strahlenpfad z.B. in zwei aufeinander folgenden Abtastperioden unterbrochen wurde. Angesichts der nach dem Zufallsprinzip vorgenommenen Variationen ist praktisch ausgeschlossen, dass infolge einer störenden Beeinflussung durch ein benachbartes Überwachungssystem die Erkennung eines im Überwachungsbereich befindlichen Objektes beeinträchtigt bzw. verhindert wird. Die Verfügbarkeit wird entsprechend erhöht.

Die Steuer- und/oder Auswerteeinheit 20 kann beispielsweise wenigstens einen Zufallsgenerator umfassen, durch den eine jeweilige Variation auf der Basis des Zufallsprinzips vorgebbar ist. So kann die betreffende Zentraleinheit oder CPU beispielsweise einen freilaufenden 16 Bit-Timer oder - Zähler umfassen, der mit der gleichen Frequenz wie der Quarz betrieben werden kann. Wird beispielsweise die Reihenfolge, in der die verschiedenen optischen Kanäle 18ᵢ nacheinander aktiviert werden bzw. die betreffenden Daten ausgelesen werden, nach dem Zufallsprinzip variiert, so kann z.B. wie folgt vorgegangen werden:

Der zuerst abzutastende optische Kanal 18ᵢ bzw. der zuerst auszulesende Sensor 14ᵢ/16ᵢ wird beispielsweise durch die letzten beiden Bits mit dem niedrigsten Stellenwert (LSB = least significant bit) des Timers oder Taktgebers vorgegeben. Bei der nächsten Abtastung wird in der gleichen Weise vorgegangen, wobei jedoch der zuletzt verwendete Wert hinzugefügt wird (Modulo 4), usw. Auf diese Weise wird bei jedem Zyklus der CPU oder Zentraleinheit basierend auf dem Zufallsprinzip z.B. eine der folgenden Reihenfolgen der abzutastenden optischen Kanäle 18₁ - 18₄ ausgewählt:

| | |
|---|---|
| Reihenfolge A | 1 - 2 - 3 - 4 |
| Reihenfolge B | 2 - 3 - 4 - 1 |
| Reihenfolge C | 3 - 4 - 1 - 2 |
| Reihenfolge D | 4 - 1 - 2 - 3 |

Entsprechend können z.B. auch die Pulsfolge bzw. Pulsabstände innerhalb eines jeweiligen optischen Kanals 18ᵢ nach dem Zufallsprinzip variiert werden. Die in der obigen Tabelle enthaltenen Zahlen geben dann beispielsweise die jeweiligen Pulsabstände an.

Es ist somit praktisch ausgeschlossen, dass bei aufeinander folgenden Abtastvorgängen wiederholt der gleiche Wert auftritt bzw. gleiche Verhältnisse vorliegen. Ebenso ist ausgeschlossen, dass zwei verschiedene Überwachungssysteme über eine längere Zeit hinweg, z.B. über einige 10 ms, miteinander synchronisiert bleiben.

Die Synchronisation zwischen einem jeweiligen Sender des Systems und dem zugeordneten Empfänger kann insbesondere optisch erfolgen, wozu der Sender beispielsweise entsprechende Informationen an den Empfänger liefern kann.

Die jeweiligen Variationen können beispielsweise vorab zwischen Sender und Empfänger vereinbart sein, was jedoch nicht zwingend ist.

Zudem kann eine jeweilige Variation in Abhängigkeit vom jeweils vorangehenden Zustand bzw. der jeweils vorangehenden Variation gewählt werden.

### Bezugszeichenliste

- 10: optoelektronisches Überwachungssystem
- 12: Überwachungsbereich
- 14ᵢ: Sender
- 16ᵢ: Empfänger
- 18ᵢ: optischer Kanal
- 20: Steuer- und/oder Auswerteeinheit

## Patentansprüche

1. Optoelektronisches Überwachungssystem (10) zur Feststellung von in einem Überwachungsbereich (12) vorhandenen Objekten, mit zumindest einem durch wenigstens einen Sender (14ᵢ) und wenigstens einen Empfänger (16ᵢ) definierten optischen Kanal (18ᵢ) sowie mit einer Steuer- und/oder Auswerteeinheit (20), wobei der Überwachungsbereich (12) über einen jeweiligen optischen Kanal (18ᵢ) mit Lichtpulsen abgetastet wird und die Steuer- und/oder Auswerteeinheit (20) ein vom Ausgangssignal des Empfängers (16ᵢ) eines jeweiligen optischen Kanals (18ᵢ) abhängiges Auswertesignal liefert,
**dadurch gekennzeichnet,**
**dass** die Steuer- und/oder Auswerteeinheit (20) Mittel umfasst, um zumindest im Fall einer erkannten, von einem anderen System ausgehenden Störung die Abtastperiode, mit der der Überwachungsbereich (12) über einen jeweiligen optischen Kanal (18ᵢ) abgetastet wird, und/oder den Zeitpunkt, zu dem der Überwachungsbereich (12) über einen jeweiligen optischen Kanal (18ᵢ) während einer jeweiligen Abtastperiode mit wenigstens einem Lichtpuls beaufschlagt wird, und/oder die Pulsfolge bzw. Pulsabstände innerhalb eines jeweiligen optischen Kanals (18ᵢ), und/oder die Reihenfolge, in der zumindest zwei optische Kanäle (18ᵢ) nacheinander aktiviert werden, nach dem Zufallsprinzip zu variieren, und dass das einem jeweiligen optischen Kanal (18ᵢ) zugeordnete Auswertesignal in Abhängigkeit von den während zumindest zweier Abtastperioden erhaltenen Ausgangssignalen des betreffenden Empfängers (16ᵢ) erzeugt wird.

2. Optoelektronisches Überwachungssystem nach Anspruch 1,
**dadurch gekennzeichnet,**
**dass** von Abtastung zu Abtastung eine jeweilige Variation erfolgt.

3. Optoelektronisches Überwachungssystem nach Anspruch 1 oder 2,
**dadurch gekennzeichnet,**
**dass** die Steuer- und/ oder Auswerteeinheit (20) zumindest einen Zufallsgenerator umfasst und eine jeweilige Variation durch diesen Zufallsgenerator vorgebbar ist.

4. Optoelektronisches Überwachungssystem nach einem der vorhergehenden Ansprüche,
**dadurch gekennzeichnet,**
**dass** das einem jeweiligen optischen Kanal (18ᵢ) zugeordnete Auswertesignal in Abhängigkeit von über zumindest einen Teil der Abtastperiode integrierten Ausgangssignalen des betreffenden Empfängers (16ᵢ) erzeugt wird.

5. Optoelektronisches Überwachungssystem nach einem der vorhergehenden Ansprüche,
**dadurch gekennzeichnet,**
**dass** ein jeweiliger optischer Kanal (18ᵢ) durch einen Einzelstrahlsensor definiert ist.

6. Optoelektronisches Überwachungssystem nach einem der vorhergehenden Ansprüche,
**dadurch gekennzeichnet,**
**dass** ein jeweiliger optischer Kanal (18ᵢ) durch nur einen Sender (14ᵢ) und nur einen Empfänger (16ᵢ) definiert ist.

7. Optoelektronisches Überwachungssystem nach einem der vorhergehenden Ansprüche,
**dadurch gekennzeichnet,**
**dass** Sender (14ᵢ) und Empfänger (16ᵢ) eines jeweiligen optischen Kanals (18ᵢ) systemintern synchronisiert sind.

8. Optoelektronisches Überwachungssystem nach einem der Ansprüche 1 bis 6,
**dadurch gekennzeichnet,**
**dass** Sender (14ᵢ) und Empfänger (16ᵢ) eines jeweiligen optischen Kanals (18ᵢ) über extern erzeugte Synchronisiersignale synchronisiert sind.

9. Optoelektronisches Überwachungssystem nach einem der vorhergehenden Ansprüche,
**dadurch gekennzeichnet,**
**dass** eine Modulation der Lichtpulse vorgesehen ist.

10. Optoelektronisches Überwachungssystem nach einem der vorhergehenden Ansprüche,
**dadurch gekennzeichnet,**
**dass** es als Sicherungssystem ausgeführt ist.

11. Optoelektronisches Überwachungssystem nach einem der vorhergehenden Ansprüche,
**dadurch gekennzeichnet,**
**dass** es als Zugangskontrollsystem ausgeführt ist.

12. Optoelektronisches Überwachungssystem nach einem der vorhergehenden Ansprüche,
**dadurch gekennzeichnet,**
**dass** es als Lichtschranke oder dergleichen ausgeführt ist.
